# EUROPÄISCHE PATENTSCHRIFT

(11) **EP 2 060 001 B1**
(45) Veröffentlichungstag und Bekanntmachung des Hinweises auf die Patenterteilung: **11.05.2011**
(21) Anmeldenummer: 07801906.4
(22) Anmeldetag: 27.08.2007
(51) Int. Cl.: H02P 5/46, H02M 3/158, H02M 7/493

(54) **VERFAHREN ZUR BEWEGUNGSSTEUERUNG VON ACHSEN UND EINE VORRICHTUNG ZUR DURCHFÜHRUNG DES VERFAHRENS**
METHOD FOR CONTROLLING THE MOTION OF AXES AND DEVICE FOR CARRYING OUT THIS METHOD
PROCEDE DE COMMANDE DU MOUVEMENT DE LES AXES ET UN DISPOSITIF POUR METTRE EN OEUVRE CE PROCEDE

(30) Priorität: 01.09.2006 DE 102006041288; 28.04.2007 DE 102007020184
(43) Veröffentlichungstag der Anmeldung: 20.05.2009
(73) Patentinhaber: SEW-EURODRIVE GmbH & Co. KG, 76646 Bruchsal (DE)
(72) Erfinder: EWERT, Stefan, 76676 Graben-Neudorf (DE); STEINSDÖRFER, Andreas, 76646 Bruchsal (DE)
(86) Internationale Anmeldenummer: PCT/EP2007/007481
(87) Internationale Veröffentlichungsnummer: WO 2008/025499

(56) Entgegenhaltungen:
- EP-A- 1 643 630
- DE-A1- 10 239 047
- JP-A- 2005 253 213

## Beschreibung

Die Erfindung betrifft ein Verfahren zur Bewegungssteuerung von Achsen und eine Vorrichtung zur Durchführung des Verfahrens.

Elektrische Antriebe umfassen einen von einem Umrichter versorgten Elektromotor, der direkt oder über ein Getriebe eine Last antreibt.

Aus der WO 2005/117248 A1 ist ein Regallagersystem bekannt, bei dem einige einzelne vordefinierte Bewegungsprofile mit zugehörigen Stromverbrauchswerten beziehungsweise Stromabgabewerten vorgesehen sind. Dabei wird die in den Energieversorgungskreis rückgespeiste Energie bestimmt (Anspruch 15 der WO 2005/117248 A1).

Aus der DE 33 09 370 A1 ist ein Verfahren zur Einflussnahme auf das Hochfahren und Auslaufen zweier Asynchronmotoren bekannt.

Aus der EP 1 643 630 A2 ist ein Verfahren zur prädiktiven Bestimmung eines Bewegungsablaufs bei einer Anlage mit mehreren Antrieben bekannt.

Aus der JP 2005 -253213 A ist ein Verfahren zum Bestimmen eines effizienten Energiemanagements bei einer Anlage mit mehreren Antrieben bekannt.

Aus der DE 102 39 047 A1 ist ein Verfahren zur Steuerung von wenigstens zwei, einen gemeinsamen Zwischenkreis umfassenden Wechselrichter und Umrichteranordnung bekannt.

Der Erfindung liegt daher die Aufgabe zugrunde, Anlagen möglichst kompakt und kostengünstig herstellbar zu machen und dabei Energieeinsparungen zu bewirken.

Erfindungsgemäß wird die Aufgabe bei der Vorrichtung nach den in Anspruch 6 und bei dem Verfahren nach den in Anspruch 1 angegebenen Merkmalen gelöst.

Wichtige Merkmale bei dem Verfahren zur Bewegungssteuerung von Achsen, deren Antriebe zum Energieaustausch verbunden sind, insbesondere durch Verbindung von Zwischenkreisen der von den Antrieben jeweils umfassten Umrichter, sind, dass
vor Beginn der Bewegung eine prädiktive Bestimmung des Bewegungsablaufes stattfindet, wobei
- zuerst die zeitkritische Achse bestimmt wird,
- dann das Verfahrprofil der zeitkritischen Achse festgelegt wird,
- dann den möglichen Verfahrprofilen weiterer Achsen ein jeweiliger Gesamtenergieverbrauch zugeordnet wird,
- davon dasjenige Profil ausgewählt wird, zu welchem der kleinste Gesamtenergiebedarf gehört,
- dann die Bewegung ausgeführt wird,
wobei die Bewegung von einem Anfangszustand, insbesondere Anfangsposition, zu einem Endzustand, insbesondere Endposition, vorgesehen ist,
wobei das Verfahrprofil mit der maximalen Beschleunigung und Bremsbeschleunigung als das Verfahrprofil der Zeitkritischen Achse bestimmt wird.

Dabei wird als Gesamtenergie diejenige Energie betrachtet, welche zum Ausführen der Bewegung über die elektrischen Versorgungsleitungen der die Antriebe umfassenden Vorrichtung zuzuführen ist.

Beim Stand der Technik nach Anspruch 15 der WO 2005/117248 A1 wird zwar die in den Energieversorgungskreis rückgespeiste Energie bestimmt; nicht jedoch wird die über die Versorgungsleitungen des Regallagersystems zugeführte Energie oder Leistung bestimmt. Bei der vorliegenden Erfindung hingegen wird die zuzuführende Gesamtenergie bestimmt und dann das Minimum bestimmt.

Von Vorteil ist bei der vorliegenden Erfindung, dass durch Bestimmen der zeitkritischen Achse die Bewegung schnell ausführbar ist und durch die abhängigen Verfahrensabläufe der weiteren Achsen ein Einsparen von Energie ermöglicht ist. Trotzdem ist die Bewegung nicht verlangsamt sondern schnellstmöglich ausgeführt, wobei die Bewegung hier nicht nur eine sondern mehrere Achsen in gegenseitiger Abhängigkeit betrifft.

**Insbesondere ist erfindungsgemäß** die Bewegung von einem Anfangszustand, insbesondere Anfangsposition, zu einem Endzustand, insbesondere Endposition, vorgesehen. Von Vorteil ist dabei, dass Positionierbewegungen energiesparend in kürzester Zeit ausführbar sind.

**Des Weiteren wird erfindungsgemäß** das Verfahrprofil für die zeitkritische Achse mit der maximalen Beschleunigung und Bremsbeschleunigung bestimmt. Von Vorteil ist dabei, dass mit der zeitkritischen Achse die schnellstmögliche Bewegung ausführbar ist.

Bei einer vorteilhaften Ausgestaltung wird das zur Bewegung zugehörige Zeitintervall für die jeweiligen weiteren Achsen und deren Verfahrprofil, insbesondere mit dazu gehörigem Beschleunigungswerten und Bremsbeschleunigungswerten, derart bestimmt wird, dass die von den zum Energieaustausch verbundenen Antrieben über die Energieversorgungsleitungen zugelieferte benötigte Spitzenleistung für die Bewegung möglichst klein, insbesondere minimal, ist. Vorteiligerweise ist also eine nur geringe Leistung zuzuführen. Insbesondere ist die größte zuzuführende Leistung während des Ausführens der Bewegung, also die Spitzenleistung, möglichst klein. Dies ermöglicht dünne Adern und somit kostengünstige Kabel als elektrische Versorgungsleitungen für die erfindungsmäßig betriebene Vorrichtung. Somit wird nicht nur der Gesamtenergieverbrauch minimal gehalten, sondern auch die von außen an die Vorrichtung insgesamt zuzuführende Spitzenleistung klein gehalten. Dies bringt dann die baulichen Vorteile, wie entsprechend dünne Leiterquerschnitte, und entsprechend klein dimensionierbare elektrische oder elektronische Bauteile. Dies betrifft beispielsweise auch Gleichrichterdioden zum Herstellen der unipolaren Zwischenkreisspannung oder Netzdrosseln zum Bedämpfen von Oberschwingungen.

Bei der Erfindung werden auch die Reibungsverluste berücksichtigt, die auch von der Geschwindigkeit der jeweiligen Achse abhängen. Insbesondere sind die Reibungsverluste reduziert, wenn die Geschwindigkeit reduziert ist. Somit ist es vorteilhaft, die nicht zeitkritischen weiteren Achsen in ihrer Geschwindigkeit zu reduzieren. Dabei wird jedoch vorrangig der motorische Betrieb der weiteren Achsen so ausgeführt, dass möglichst viel Energie aus dem generatorischen Betrieb der zeitkritischen Achse verbraucht werden kann von den weiteren Achsen.

Von Vorteil ist dabei, dass die von einer Achse in generatorischer Betriebsart erzeugte Energie anderen Achsen zur Verfügung stellbar ist. Somit ist der Gesamtenergieverbrauch bei der Bewegung reduziert.

Bei einer vorteilhaften Ausgestaltung ist das zur Bewegung zugehörige Zeitintervall für die jeweiligen weiteren Achsen derart vorgesehen, dass zumindest ein Zeitbereich umfasst ist, in welchem die zeitkritische Achse gebremst wird, insbesondere also eine Bremsbeschleunigung der zeitkritischen Achse vorgesehen ist. Vorteilig ist dabei, dass die weiteren Achsen möglichst die von der zeitkritischen Achse rückgespeiste Energie verbrauchen. Somit wird nur geringe Spitzenleistung benötigt.

Bei einer vorteilhaften Ausgestaltung werden die weiteren Achsen zumindest dann betrieben, wenn die zeitkritische Achse generatorisch betrieben wird. Von Vorteil ist dabei, dass die generatorisch erzeugte Energie der zeitkritischen Achse von den weiteren Achsen verbraucht werden kann.

Außerdem kann auch beim generatorischen Betrieb der weiteren Achse Energie an die in diesem Zeitraum motorisch betriebene zeitkritische Achse geliefert werden.

Bei einer vorteilhaften Ausgestaltung werden die weiteren Achsen derart mit gegenüber der maximal zulässigen Geschwindigkeit reduzierter Geschwindigkeit betrieben, dass sie zumindest während der gesamten Zeitspanne betrieben werden, während der die zeitkritische Achse generatorisch betrieben wird. Von Vorteil ist dabei, dass bei reduzierter Geschwindigkeit die Reibungsverluste reduziert sind und somit Energie einsparbar ist.

Wichtige Merkmale der Erfindung bei der Vorrichtung sind, dass die Vorrichtung Achsen antreibende Antriebe, welche jeweils zumindest einen Zwischenkreis umfassende Umrichter umfassen, umfasst, wobei
die Zwischenkreise der Umrichter zum Austausch von Energie miteinander verbunden sind,
wobei zumindest ein Rechner vorgesehen ist, der Mittel zur prädiktiven Bestimmung der Achsbewegung umfasst, insbesondere wobei der Rechner auch Mittel zur Bestimmung eines gesamtenergieoptimierten Bewegung der Achsen umfasst.

Von Vorteil ist dabei, dass durch die Prädiktion und Berücksichtigung des ermöglichten Energieaustausches die Bewegung energiesparend ausführbar ist ohne Vergrößerung des Zeitbedarfs.

Bei einer vorteilhaften Ausgestaltung umfasst die Vorrichtung einen Rechner, insbesondere Steuerung für Vorausberechnung von Bahnkurven, insbesondere zur Vorausberechnung und Steuerung der Antriebe in gegenseitiger Abhängigkeit bei der Bewegung. Eine Rückführung über die Achsbewegung bei entsprechender Ausgestaltung der Vorrichtung entbehrlich. Von Vorteil ist dabei, dass keine zentrale SPS sondern eine dezentrale Anordnung der Rechenkapazität ermöglicht ist, weil nur die Bahn in gegenseitiger Abhängigkeit gesteuert werden muss. Selbstverständlich ist ein allgemeiner Befehl von einer übergeordneten Steuerung und/oder SPS zusätzlich berücksichtigbar.

Bei einer vorteilhaften Ausgestaltung sind der Rechner und die Antriebe zum Ausführen einer Master-Slave-Regelung vorsehbar, wobei als Master die zeitkritische Achse als Slave weitere Achsen vorgesehen sind. Von Vorteil ist dabei, dass keine Zeitverluste entstehen, weil der Slave als Funktion des Master-Antriebs steuerbar ist.

Bei einer vorteilhaften Ausgestaltung ist der Rechner in einem der Umrichter integriert vorgesehen. Von Vorteil ist dabei, dass kein separater Rechner notwendig ist und somit Gehäuse einsparbar sind.

Bei einer vorteilhaften Ausgestaltung ist die Vorrichtung ein Regalbediengerät, insbesondere mit zumindest einem Antrieb für ein Hubwerk und einem weiteren Antrieb für Bewegung des das Hubwerk umfassenden Hauptfahrzeuges. Von Vorteil ist dabei, dass der Energieverbrauch des Gerätes verringert ist und somit die Energieversorgungsleitungen des Gerätes für entsprechend kleinere Leistungen auslegbar sind. Beispielsweise ist es auf diese Weise ermöglicht, eine Schleifleitung besser auszunutzen oder sogar ein System zur berührungslosen Energieversorgung des Hauptfahrzeuges einzusetzen, wobei die Energieversorgung über eine induktive Kopplung erfolgt.

Weitere Vorteile ergeben sich aus den Unteransprüchen.

### Bezugszeichenliste

- 1: zeitkritische Achse x
- 2: weitere Achse z

Die Erfindung wird nun anhand von Abbildungen näher erläutert:

Die Erfindung ist bei einer Maschine oder Anlage, die zumindest zwei Antriebe aufweist, welche insbesondere in gegenseitiger Abhängigkeit verfahrbar sind, vorteilhaft anwendbar.

Wenn beispielsweise der erste Antrieb eine erste Achse der Maschine antreibt und der zweite eine zweite Achse, besteht häufig die Aufgabe von einem Anfangszustand (x1,y1) in einen Endzustand (x2,y2) zu verfahren, wobei x1 die Anfangsposition der ersten Achse und x2 die Endposition der ersten Achse ist, sowie y1 die Anfangsposition der zweiten Achse und y2 die Endposition der zweiten Achse.

Die Achse ist von einem Elektromotor angetrieben, der von einem elektrischen Antrieb umfasst sein kann, und entweder als rotatorische oder lineare Achse ausgeführt ist.

Jedem Antrieb ist eine maximale Beschleunigung zugeordnet.

Einer der Antriebe ist je nach Zustandswerten der zeitkritische. Dies bedeutet, dass diejenige Zeitdauer, welche die zugehörige Achse benötigt, um von Anfangsposition zur Endposition zu gelangen, die Zeitdauer vom Anfangszustand zum Endzustand der Maschine bestimmt. Dabei ist die maximale Beschleunigung, Geschwindigkeit und Bremsbeschleunigung vorgesehen.

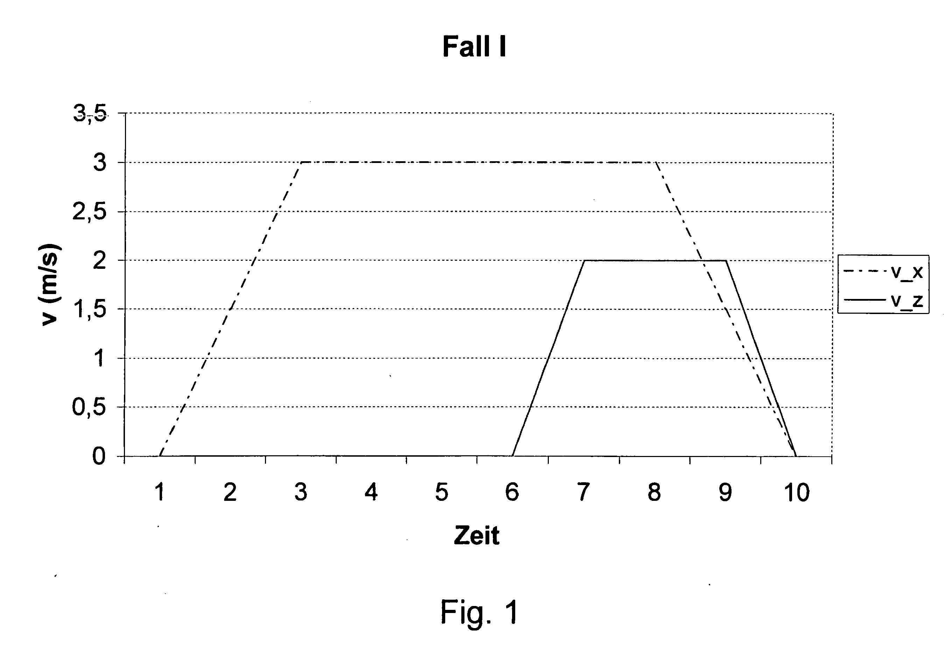

Dies ist in Figur 1 veranschaulicht, wo die Geschwindigkeit über der Zeit aufgetragen ist. Dabei ist die Achse x die zeitkritische Achse. Diese wird mit der maximal zulässigen Beschleunigung gestartet, bis die maximal zulässige Geschwindigkeit erreicht ist. Zum Bremsen wird die maximal zulässige Bremsbeschleunigung angewandt.

Die weitere Achse wird energieoptimiert verfahren. Dies bedeutet, dass der Beschleunigungswert und die Bremsbeschleunigung derart gewählt werden und zwar in einem derartigen Zeitintervall, dass der gesamte Leistungsverbrauch möglichst klein ist. Auf diese Weise ist es ermöglicht generatorisch erzeugte Energie beim Abbremsen der x Achse für das Verfahren der z-Achse zu nutzen.

Vorteilhafterweise sind hierzu die Zwischenkreise der Antriebe zum Energieaustausch miteinander verbunden. Dabei weist jeder Umrichter des jeweiligen Antriebs einen Gleichrichter zum Erzeugen einer unipolaren Spannung aus der den Umrichter versorgenden Netzspannung auf, wobei die unipolare Spannung die Zwischenkreisspannung ist und an einem Kondensator anliegt. Aus dieser Zwischenkreisspannung wird dann die Endstufe versorgt, welche von einer Steuerungselektronik des Umrichters steuerbare elektronische Leistungsschalter umfasst.

Bei der Erfindung ist also der Zwischenkreis eines ersten Umrichters mit dem eines zweiten verbunden und es kann Energie ausgetauscht werden.

In Figur 1 ist ganz klar ersichtlich, dass die beim Abbremsen der x-Achse in den Zwischenkreis eingespeiste Energie genutzt wird zum Verfahren der z-Achse. Da der Verfahrweg der z-Achse weniger als halb so groß ist wie der Verfahrweg der x-Achse, wird die z-Achse erst nach dem Überschreiten des halben Weges der x-Achse gestartet.

Wenn dabei der Verfahrweg der z-Achse viel kleiner wäre, wären verschieden lange Zeitintervalle für die z-Achse möglich und es würde derjenige gewählt, welcher den geringsten Leistungsverbrauch hätte, wobei die Reibung berücksichtigt wird. Dies führt dann zu einem möglichst langsamen Verfahren.

Wesentlich ist also, dass von allen energiegekoppelten Umrichters insgesamt verbrauchte Energie für den Verfahrvorgang zu minimieren.

Die Achsen x und z können auch die Fahrachse und Hubachse eines Regalbediengerätes sein, das einen Fahrantrieb für das gesamte Fahrzeug und einen Hubantrieb für einen Vertikalförderer umfasst.

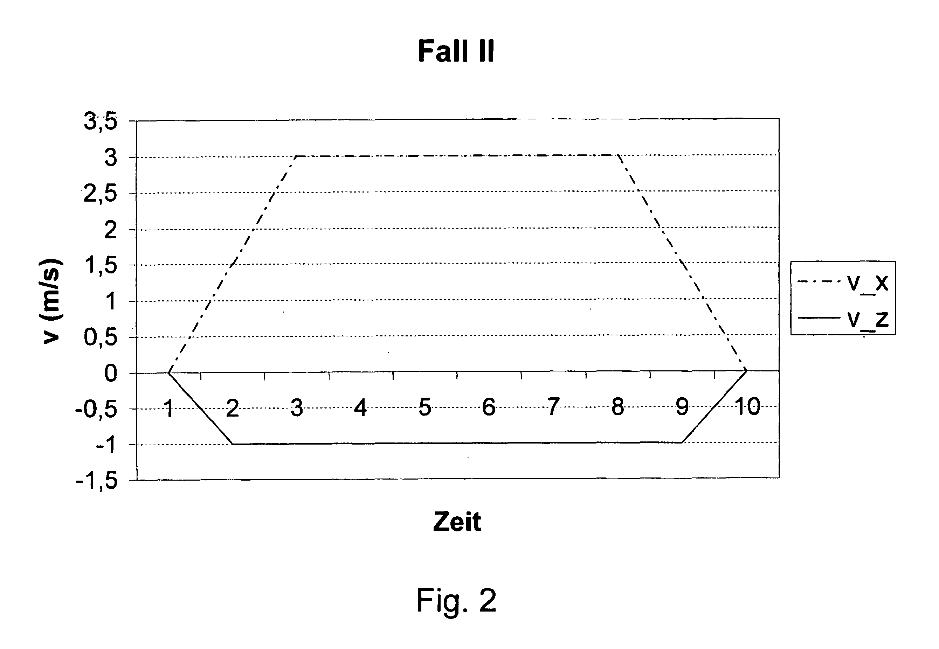

Figur 2 zeigt den Fall, dass eine Hubachse - hier die z-Achse - abgesenkt wird, und die x-Achse als Fahrachse aufgebaut ist. Dabei wird mit der X-Achse das Fahrzeug verfahren, also anfänglich beschleunigt, und am Ende abgebremst. Zeitkritisch ist hierbei die X-Achse. Dabei ist dann ein energieoptimiertes Ergebnis erreicht, wenn die Z-Achse möglichst während der gesamten Verfahrzeit der X-Achse abgesenkt wird.

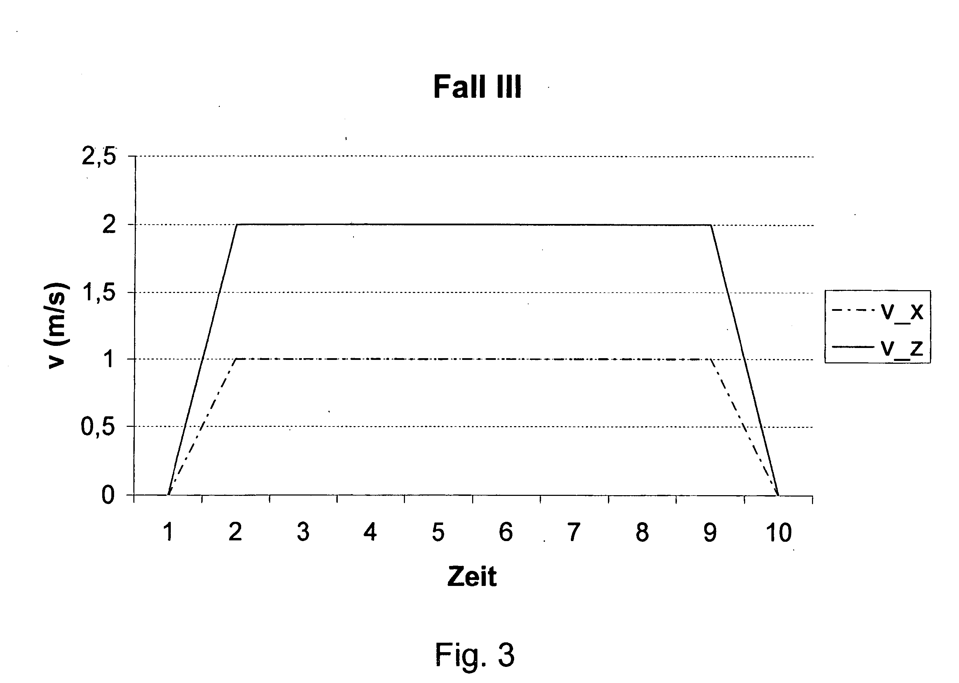

Figur 3 zeigt den Fall, dass die Z-Achse die zeitkritische Achse ist und die X-Achse mit reduzierter Geschwindigkeit verfahren wird, um die Reibungsverluste zu verringern und insbesondere beim Abbremsen der Z-Achse wenigstens einen Teil der generatorischen Energie der Z-Achse von der X-Achse verbrauchen zu lassen. Diese wird dabei nämlich mit einer kleineren Bremsbeschleunigung betrieben als die maximal zulässige.

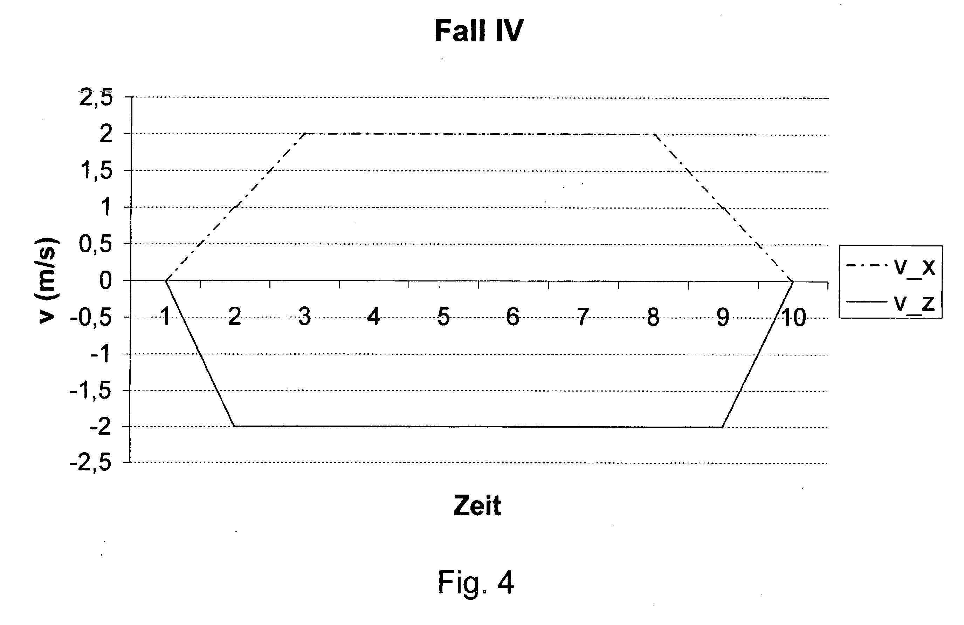

Figur 4 zeigt den Fall, dass die X-Achse langsam abgebremst wird, also mit einem geringen Bremsmoment, und die Z-Achse als zeitkritische Achse mit maximal zulässigem Bremsmoment abgebremst wird. Dabei wird dann von der Z-Achse vor Einleiten ihres Bremsprozesses Energie von der X-Achse übernommen, da der Bremsvorgang der X-Achse früher einsetzt.

Insgesamt wird also bei der Erfindung zuerst die zeitkritische Achse bestimmt und dann die schnellstmögliche Verfahrweise für diese Achse festgelegt. Danach wird dann das Verfahrprofil, insbesondere Geschwindigkeitsprofil, für die weitere Achse bestimmt, wobei ein Minimum im dem jeweiligen Verfahrprofil zugeordneten Gesamtenergieverbrauch ausgesucht wird. Dabei werden auch Reibungsverlustleistungen berücksichtigt.

Die Vorgehensweise erfordert allerdings Prädiktion. Dies bedeutet, dass ein Rechner vor Ausführen der Bewegung die genannten Bestimmungen zunächst ausführt und erst dann die Bewegung gestartet werden kann.

Bei der Erfindung wird durch die Koppelung der Zwischenkreise ein Energieaustausch zwischen den Umrichtern der Antriebe ermöglicht. Somit ist von einem in generatorischer Betriebsart betriebenen Antrieb erzeugte Energie an einen motorisch arbeitenden Antrieb überführbar. Die ansonsten durch vom Zwischenkreis aus speisbaren Bremswiderstände vernichtete Energie wird verringert.

Bei weiteren erfindungsgemäßen Ausführungsbeispielen werden nicht alle möglichen Verfahrprofile für die weiteren Achsen bestimmt und dann deren zugehörige Gesamtenergie sondern es werden die möglichen Verfahrprofile mit Parametern ausgestattet, deren Wertebereich festgelegt wird, also die Randbedingungen festgelegt werden. Als beispielhafte Randbedingungen sind zu nennen Zeitbereiche für das Verfahren der weiteren Achsen, maximale Beschleunigungen und dergleichen. Danach wird ein Optimierverfahren zur Bestimmung eines zumindest lokalen Optimums in diesem mehrdimensionalen Parameterraum angewendet. Die Optimierung wird hauptsächlich bezüglich der Gesamtenergie ausgeführt. Wenn mehrere Lösungen auftreten können, wird die Optimierung auch bezüglich der möglichst kleinen zuzuführenden Spitzenleistung ausgeführt.

Bei weiteren erfindungsgemäßen Ausführungsbeispielen werden zusätzliche Regeln für die weiteren Verfahrprofile eingegeben, die auf die jeweilige Vorrichtung ausgerichtet sind. Somit ist der Parameterraum weiter einschränkbar und die Optimierung einfacher und schneller ausführbar. Insbesondere ist nicht nur ein lokales sondern das absolute Optimum findbar.

Bei weiteren erfindungsgemäßen Ausführungsbeispielen versorgt ein Versorgungsmodul alle Umrichter mit einer Zwischenkreisspannung, so dass die Umrichter keine jeweiligen Gleichrichter zum Gleichrichten der Netzspannung benötigen. Denn es genügt ein Gleichrichter im Versorgungsmodul zum Gleichrichten der Netzspannung. Außerdem ist in dem Versorgungsmodul ein Bremswiderstand vorsehbar und/oder eine Netz-Rückspeiseeinheit. Alternativ ist das Versorgungsmodul mit einem Matrixumrichter ausstattbar, so dass der Gleichrichter und die Rückspeisung hierdurch ersetzbar sind. Auf diese Weise werden weniger Leistungshalbleiterbauteile insgesamt benötigt.

Die Umrichter sind also im Wesentlichen als Wechselrichter ausgeführt und/oder betrieben, so dass sie in der Lage sind, aus der unipolaren Zwischenkreisspannung die Wechselspannung für die Versorgung der Elektromotoren der Antriebe bereit zu stellen.

Als Vorrichtung sind insbesondere mehrachsig betriebene Regalbediengeräte, Roboter, Handhabungssysteme oder andere Maschinen und Anlagen mit mehreren in gegenseitiger Abhängigkeit betreibbaren Achsen verwendbar.

## Patentansprüche

1. Verfahren zur Bewegungssteuerung von Achsen, deren Antriebe zum Energieaustausch verbunden sind, insbesondere durch Verbindung von Zwischenkreisen der von den Antrieben jeweils umfassten Umrichter,
wobei vor Beginn der Bewegung eine prädiktive Bestimmung des Bewegungsablaufes stattfindet,
wobei
- zuerst die zeitkritische Achse (1) bestimmt wird,
- dann das Verfahrprofil der zeitkritischen Achse (1) festgelegt wird,
- dann den möglichen Verfahrprofilen weiterer Achsen (2) ein jeweiliger Gesamtenergieverbrauch zugeordnet wird,
- davon dasjenige Profil ausgewählt wird, zu welchem der kleinste Gesamtenergiebedarf gehört,
- dann die Bewegung ausgeführt wird,
**dadurch gekennzeichnet, dass**
die Bewegung von einem Anfangszustand, insbesondere Anfangsposition, zu einem Endzustand, insbesondere Endposition, vorgesehen ist,
wobei das Verfahrprolil mit der maximalen Beschleunigung und Bremsbeschleunigung als das Verfahrprofil der Zeitkritischen Achse (1) bestimmt wird.

2. Verfahren nach mindestens einem der vorangegangenen Ansprüche,
**dadurch gekennzeichnet, dass**
das zur Bewegung zugehörige Zeitintervall für die jeweiligen weiteren Achsen (2) und deren Verfahrprofil, insbesondere mit dazu gehörigem Beschleunigungswerten und Bremsbeschleunigungswerten, derart bestimmt wird, dass die von den zum Energieaustausch verbundenen Antrieben über die Energieversorgungsleitungen zugelieferte benötigte Spitzenleistung für die Bewegung möglichst klein, insbesondere minimal, ist.

3. Verfahren nach mindestens einem der vorangegangenen Ansprüche,
**dadurch gekennzeichnet, dass**
das zur Bewegung zugehörige Zeitintervall für die jeweiligen weiteren Achsen derart vorgesehen ist, dass zumindest ein Zeitbereich umfasst ist, in welchem die zeitkritische Achse gebremst wird, insbesondere also eine Bremsbeschleunigung der zeitkritischen Achse vorgesehen ist.

4. Verfahren nach mindestens einem der vorangegangenen Ansprüche,
**dadurch gekennzeichnet, dass**
die weiteren Achsen (2) zumindest dann betrieben werden, wenn die zeitkritische Achse (1) generatorisch betrieben wird.

5. Verfahren nach mindestens einem der vorangegangenen Ansprüche,
**dadurch gekennzeichnet, dass**
die weiteren Achsen (2) derart mit gegenüber der maximal zulässigen Geschwindigkeit reduzierter Geschwindigkeit betrieben werden, dass sie zumindest während der gesamten Zeitspanne betrieben werden, während der die zeitkritische Achse (1) generatorisch betrieben wird.

6. Vorrichtung zur Durchführung einer Bewegungssteuerung von Achsen, deren Antriebe zum Energieaustausch verbunden sind,
wobei die Vorrichtung Achsen antreibende Antriebe umfasst, welche jeweils zumindest einen Zwischenkreis umfassende Umrichter umfassen,
wobei die Zwischenkreise der Umrichter zum Austausch von Energie miteinander verbunden sind,
wobei zumindest ein Rechner vorgesehen ist, der
aufweist:
- Mittel zum prädiktiven Bestimmen des Bewegungsablaufes, also der Achsbewegung, von einem Anfangszustand, insbesondere Anfangsposition, zu einem Endzustand, insbesondere Endposition, vor Beginn der Bewegung,
- Mittel, die zum Festlegen des Verfahrprofils der zeitkritischen Achse (1) ausgebildet sind,
- Mittel zum Zuordnen des zu möglichen Verfahrprofilen weiterer Achsen (2) zugehörigen jeweiligen Gesamtenergieverbrauchs,
- Mittel zum Auswählen des Verfahrprofils mit maximaler Beschleunigung sowie Bremsbeschleunigung als das Verfahrprofil der Zeitkritischen Achse (1),
- Mittel zum Auswählen des Verfahrprofils mit dem kleinsten Gesamtenergiebedarf als das Verfahrprofil der weiteren Achsen (2) und
- Mittel zum Ausführen dieses Verfahrprofils.

7. Vorrichtung nach mindestens einem der vorangegangenen Ansprüche,
**dadurch gekennzeichnet, dass**
die Vorrichtung einen Rechner, insbesondere Steuerung für Antriebe umfassende Achsen, umfasst, insbesondere zur Vorausberechnung und Steuerung der Antriebe in gegenseitiger Abhängigkeit bei der Bewegung.

8. Vorrichtung nach mindestens einem der vorangegangenen Ansprüche,
**dadurch gekennzeichnet, dass**
der Rechner und die Antriebe zum Ausführen einer Master-Slave-Regelung vorsehbar sind, wobei als Master die zeitkritische Achse als Slave weitere Achsen vorgesehen sind.

9. Vorrichtung nach mindestens einem der vorangegangenen Ansprüche,
**dadurch gekennzeichnet, dass**
der Rechner in einem der Umrichter integriert vorgesehen ist.

10. Vorrichtung nach mindestens einem der vorangegangenen Ansprüche,
**dadurch gekennzeichnet, dass**
die Vorrichtung ein Regalbediengerät ist, insbesondere mit zumindest einem Antrieb für ein Hubwerk und einem weiteren Antrieb für Bewegung des das Hubwerk umfassenden Hauptfahrzeuges.

## Claims

1. A method for controlling the movement of axles, the drives of which are connected for energy exchange, in particular by connection of intermediate circuits of the converters comprised in each case by the drives,
wherein a predictive determination of the sequence of movements takes place prior to the start of the movement,
wherein
- first the time-critical axle (1) is determined,
- then the displacement profile of the time-critical axle (1) is defined,
- then a respective total energy consumption is assigned to the possible displacement profiles of further axles (2),
- the profile to which the smallest total energy requirement belongs is selected therefrom,
- then the movement is performed,
**characterised in that**
the movement is provided from an initial state, in particular starting position, to a final state, in particular end position,
the displacement profile with the maximum acceleration and braking acceleration being determined as the displacement profile of the time-critical axle (1).

2. A method according to at least one of the preceding claims,
**characterised in that**
the time interval associated with the movement for the respective further axles (2) and the displacement profile thereof, in particular with acceleration values and braking acceleration values associated therewith, is determined such that the required peak output for the movement which is delivered from the drives which are connected for energy exchange via the power supply lines is as small as possible, in particular minimal.

3. A method according to at least one of the preceding claims,
**characterised in that**
the time interval associated with the movement for the respective further axles is provided such that at least one time range is comprised in which the time-critical axle is braked, in particular therefore a braking acceleration of the time-critical axle is provided.

4. A method according to at least one of the preceding claims,
**characterised in that**
the further axles (2) are operated at least when the time-critical axle (1) is operated as a generator.

5. A method according to at least one of the preceding claims,
**characterised in that**
the further axles (2) are operated at a reduced speed compared with the maximum permissible speed such that they are operated at least during the entire amount of time during which the time-critical axle (1) is operated as a generator.

6. A device for carrying out a movement control of axles, the drives of which are connected for energy exchange,
the device comprising drives which drive axles, which drives comprise converters comprising at least one intermediate circuit in each case,
the intermediate circuits of the converters being connected together for exchanging energy,
at least one computer being provided, which has:
- means for predictive determination of the sequence of movements, i.e. of the axle movement, from an initial state, in particular starting position, to a final state, in particular end position, prior to the start of the movement,
- means which are formed to define the displacement profile of the time-critical axle (1),
- means for associating the respective total energy consumption which is associated with possible displacement profiles of further axles (2),
- means for selecting the displacement profile with maximum acceleration and braking acceleration as the displacement profile of the time-critical axle (1),
- means for selecting the displacement profile with the smallest total energy requirement as the displacement profile of the further axles (2), and
- means for implementing this displacement profile.

7. A device according to at least one of the preceding claims,
**characterised in that**
the device comprises a computer, in particular a control means for axles which comprise drives, in particular for advance calculation and control of the drives in mutual dependence upon the movement.

8. A device according to at least one of the preceding claims,
**characterised in that**
the computer and the drives can be provided for implementing a master/slave regulation, the time-critical axle being provided as master, and further axles as slaves.

9. A device according to at least one of the preceding claims,
**characterised in that**
the computer is provided integrated in one of the converters.

10. A device according to at least one of the preceding claims,
**characterised in that**
the device is a storage and retrieval machine, in particular with at least one drive for a lifting mechanism and a further drive for moving the main vehicle comprising the lifting mechanism.

## Revendications

1. Procédé de commande du mouvement d'axes dont les entraînements sont reliés en vue de l'échange d'énergie, notamment par connexion de circuits intermédiaires des changeurs de fréquence respectivement inclus dans lesdits entraînements,
une détermination prédictive du déroulement du mouvement ayant lieu préalablement au début dudit mouvement,
sachant que
- l'axe temporel critique (1) est tout d'abord déterminé,
- le profil de déplacement dudit axe temporel critique (1) est ensuite fermement établi,
- une consommation globale d'énergie est, ensuite, respectivement associée aux profils de déplacement possibles d'axes supplémentaires (2),
- le profil, auquel appartient le besoin global en énergie le plus faible, est sélectionné au sein desdits profils,
- puis le mouvement est exécuté,
**caractérisé par le fait que**
le mouvement est prévu depuis un état initial, en particulier un emplacement initial, jusqu'à un état final, en particulier un emplacement final,
le profil de déplacement, présentant l'accélération et l'accélération de freinage maximales, étant déterminé comme le profil de déplacement de l'axe temporel critique (1).

2. Procédé selon au moins la revendication précédente,
**caractérisé par le fait que**
l'intervalle de temps assigné au mouvement, relatif aux axes supplémentaires respectifs (2) et au profil de déplacement de ces derniers, est en particulier déterminé avec des valeurs d'accélération et d'accélération de freinage associées, de telle sorte que la puissance de crête requise pour ledit mouvement et délivrée par les entraînements reliés en vue de l'échange d'énergie, par l'intermédiaire des conducteurs d'alimentation en énergie, soit la plus faible possible et soit notamment minimale.

3. Procédé selon au moins l'une des revendications précédentes,
**caractérisé par le fait que**
l'intervalle de temps assigné au mouvement, relatif aux axes supplémentaires respectifs, est prévu de façon que soit englobée au moins une plage temporelle dans laquelle l'axe temporel critique est freiné, c'est-à-dire qu'il est notamment prévu une accélération de freinage dudit axe temporel critique.

4. Procédé selon au moins l'une des revendications précédentes,
**caractérisé par le fait que**
les axes supplémentaires (2) sont actionnés au moins lorsque l'axe temporel critique (1) est actionné par générateur.

5. Procédé selon au moins l'une des revendications précédentes,
**caractérisé par le fait que**
les axes supplémentaires (2) sont actionnés avec vitesse réduite par rapport à la vitesse maximale admissible, de façon telle qu'ils soient actionnés au moins durant la totalité du laps de temps pendant lequel l'axe temporel critique (1) est actionné par générateur.

6. Dispositif pour l'exécution d'une commande du mouvement d'axes dont les entraînements sont reliés en vue de l'échange d'énergie,
ledit dispositif comprenant des entraînements qui mènent des axes et englobent des changeurs de fréquence incluant, à chaque fois, au moins un circuit intermédiaire,
les circuits intermédiaires desdits changeurs de fréquence étant connectés les uns aux autres en vue de l'échange d'énergie,
sachant qu'il est prévu au moins un ordinateur
comportant :
- des moyens de détermination prédictive du déroulement du mouvement, c'est-à-dire du mouvement des axes depuis un état initial, en particulier un emplacement initial, jusqu'à un état final, en particulier un emplacement final, préalablement au début dudit mouvement,
- des moyens conçus pour établir fermement le profil de déplacement de l'axe temporel critique (1),
- des moyens d'assignation de la consommation globale d'énergie, respectivement associée à des profils de déplacement possibles d'axes supplémentaires (2),
- des moyens de sélection du profil de déplacement, présentant l'accélération et l'accélération de freinage maximales, en tant que profil de déplacement dudit axe temporel critique (1),
- des moyens de sélection du profil de déplacement, présentant le besoin global en énergie le plus faible, en tant que profil de déplacement desdits axes supplémentaires (2), et
- des moyens d'exécution de ce profil de déplacement.

7. Dispositif selon au moins l'une des revendications précédentes,
**caractérisé par le fait que**
ledit dispositif renferme un ordinateur, en particulier une commande dévolue à des axes comprenant des entraînements, notamment en vue du calcul préalable et de la commande desdits entraînements selon une dépendance réciproque au cours du mouvement.

8. Dispositif selon au moins l'une des revendications précédentes,
**caractérisé par le fait que**
l'ordinateur et les entraînements peuvent être prévus pour l'exécution d'une régulation de type asservi, l'axe temporel critique étant prévu en tant qu'élément dominant et des axes supplémentaires étant prévus en tant qu'élément dominé.

9. Dispositif selon au moins l'une des revendications précédentes,
**caractérisé par le fait que**
l'ordinateur est prévu avec intégration dans l'un des changeurs de fréquence.

10. Dispositif selon au moins l'une des revendications précédentes,
**caractérisé par le fait que**
ledit dispositif est un appareil de manoeuvre de rayonnages comprenant, en particulier, au moins un entraînement destiné à un mécanisme élévateur, et un entraînement supplémentaire dévolu au mouvement du véhicule principal comportant ledit mécanisme élévateur.
